# EUROPÄISCHE PATENTSCHRIFT

(11) **EP 0 820 615 B1**
(45) Veröffentlichungstag und Bekanntmachung des Hinweises auf die Patenterteilung: **09.02.2000**
(21) Anmeldenummer: 96907277.6
(22) Anmeldetag: 25.03.1996
(51) Int. Cl.: G06F 13/14

(54) **ANSCHALTUNG ZUR EINKOPPLUNG VON BINÄREN STEUER- UND MELDESIGNALEN IN EINE DATENVERARBEITUNGSEINHEIT**
CONNECTION FOR COUPLING BINARY CONTROL AND WARNING SIGNALS TO A DATA PROCESSING UNIT
CONNEXION DE SIGNAUX BINAIRES DE COMMANDE ET DE SIGNALISATION A UNE UNITE DE TRAITEMENT DE DONNEES

(30) Priorität: 10.04.1995 DE 19513548
(43) Veröffentlichungstag der Anmeldung: 28.01.1998
(73) Patentinhaber: SIEMENS AKTIENGESELLSCHAFT, 80333 München (DE)
(72) Erfinder: STREICHERT, Gerhard, D-92353 Postbauer-Heng (DE)
(86) Internationale Anmeldenummer: DE9600523
(87) Internationale Veröffentlichungsnummer: WO9632680

(56) Entgegenhaltungen:
- US-A- 5 155 839
- H. MÜLLER ET AL.: "Mikroprozessortechnik" 1988 , VOGEL FACHBUCHVERLAG , WÜRZBURG XP002010411 in der Anmeldung erwähnt siehe Seite 237 - Seite 255

## Beschreibung

Beispielsweise bei der Automatisierung von technischen Prozessen, wie z.B. bei technischen Anlagen, Maschinen, Geräten und dergleichen, mit Hilfe von Datenverarbeitungsanlagen, z.B. Prozeßrechnern, speicherprogrammierbaren oder numerischen Steuerungen oder anwenderspezifisch entwickelten integrierten Schaltkreisen ( sogenannten ASIC's ), müssen in der Regel eine Vielzahl von binären Steuer- und Meldesignalen verarbeitet werden. Im Folgenden wird die Datenverarbeitungsanlage zur Vereinfachung Prozessor genannt, womit aber keine Beschränkung auf herkömmliche Mikroprozessoren verbunden ist. Die binären Steuer- und Meldesignale, nachfolgend zur Vereinfachung Binärsignale genannt, werden von geeigneten Gebern im technischen Prozeß abhängig vom aktuellen Zustand oder beim Auftreten von besonderen Betriebszuständen erzeugt und müssen dem Prozessor zugeführt werden. Hierdurch wird im Prozessor eine Änderung von dessen Programmablauf im Sinne einer geeigneten, vorgesehenen Reaktion auf den durch das jeweilige Binärsignal mitgeteilten veränderten Zustand verursacht.

Derartige Zustandsänderungen können in zwei Gruppen gegliedert werden. Bei der ersten Gruppe von Zustandsänderungen handelt es sich um sogenannte Melde- oder Alarmsignale. Die dazugehörigen Binärsignale erfordern aufgrund der Dringlichkeit eine schnelle Reaktion des Prozessors und nachfolgend als interruptfähige Binärsignale bezeichnet. Bei Mikroprozessoren können solche schnellen Reaktionen durch sofortige Unterbrechungen des laufenden Programms mit Hilfe eines sogenannten Interrupts bewirkt werden. Bei der zweiten Gruppe von Zustandsänderungen handelt es sich um sogenannte Statussignale, welche den Eintritt einer weniger kritischen, meist auch langfristiger anstehenden Betriebsänderung anzeigen. Die dazugehörigen Binärsignale, welche nachfolgend als statusfähige Binärsignale bezeichnet werden, erfordern zwar keine schnelle Reaktion des Prozessors, müssen aber dennoch innerhalb eines vorgesehenen Zeitraums ordnungsgemäß in den Programmablauf des Prozessors einschleust werden.

Aus der US 5,155,839 ist eine Anpassungsschaltung bekannt, welche zwischen eine serielle Datenquelle und einen Mikroprozessor schaltbar ist. Für den Fall, daß der Mikroprozessor Interrupte verarbeiten kann, stellt die Anpassungsschaltung dem Mikroprozessor ein Interruptsignal zur Verfügung, welcher daraufhin ein Interrupterkennungssignal abgibt und den anstehenden Interruptvektor von der Datenquelle ließt. Falls der angeschlossene Mikroprozessor andererseits keine Interrupte verarbeiten kann, so ermöglicht die Anpassungsschaltung auch die sogenannte Abfragemethode. Dabei wird zyklisch eine Interruptleitung daraufhin überprüft, ob sich ein Interrupt erreignet hat. Ist dies derFall, so wird der Interruptvektor von der Anpassungsschaltung dem Mikroprozessor an einem Eingang zum Einlesen zur Verfügug gestellt.

Ein Problem wird nun darin gesehen, daß bislang meist jedes Binärsignal, insbesondere die Binärsignale der ersten Gruppe, welche durch Auslösung eines Interrupts eine schnelle Reaktion des Prozessors erzwingen, in Form eines separaten Signals dem Prozessor System zugeführt werden. Verfügt z.B. ein anwenderspezifischer Schaltkreis ( ASIC ) über sehr viele interne Interrupt-Quellen, so müssen sehr viele Anschlüsse am Ausgang des ASIC und am Eingang des Prozessor Systems reserviert werden. Andererseits ist die Art der Zuführung eines eine Statusänderung signalisierenden Binärsignales der zweiten Gruppe zum Prozessor im Vergleich zu den statusfähigen Binärsignalen in der Regel unterschiedlich. So werden hardwaremäßig häufig unterschiedliche Anschaltungen für interruptfähige und für statusfähige Binärsignale am Prozessoreingang vorgesehen. Hierdurch wird der Schaltungsaufwand weiter vergrößert.

In dem Fachbuch von Helmut Müller und Lothar Walz mit dem Titel "Mikroprozessortechnik" , Vogel Fachbuchverlag Würzburg, 1. Auflage 1988, ist auf den dortigen Seiten 237 bis 255 ein sogenannter Parallelschnittstellenbaustein beschrieben. Dieser weist zwei, als je ein Port bezeichnete Ein- oder Ausgabedatenregister auf. Die Auswahl der Datenrichtung erfolgt über ein Programm, wobei für die Ports eine Vielzahl von Betriebsarten vorgegeben werden können. Bei einer als Einzelbit-Ein-/Ausgabe bezeichneten Betriebsart kann jedes Bit eines Ports durch einen Einzelbitbefehl verändert und ausgegeben oder eingelesen werden. Ferner kann jedes Bit, das als Eingang geschaltet ist, einen Interrupt auslösen.

Demgegenüber liegt der Erfindung die Aufgabe zu Grunde, eine universeller einsetzbare Anschaltung anzugeben.

Die Aufgabe wird gelöst mit der im Anspruch 1 enthaltenen Anschaltung. Vorteilhafte weitere Ausgestaltungen der Erfindung sind in den Unteransprüchen enthalten.

Die erfindungsgemäße Anschaltung hat den Vorteil, daß es aufgrund einer geeigneten internen Vorverarbeitung in den erfindungsgemäßen Vorschaltmodulen ermöglicht wird, auf einfache Weise Binärsignale beider Gruppen, d.h. sowohl interruptfähige Binärsignale als auch statusfähige Binärsignale, einem Prozessor zuzuführen.

Die Erfindung wird mit dem nachfolgend kurz angeführten Figuren näher erläutert. Dabei zeigt
- Fig.1: ein Blockschaltbild der erfindungsgemäßen Anschaltung,
- Fig.2: eine erste Ausführungsform für ein Vorschaltmodul in der erfindungsgemäßen Anschaltung, und
- Fig.3: eine zweite Ausführungsform für ein Vorschaltmodul in der erfindungsgemäßen Anschaltung.

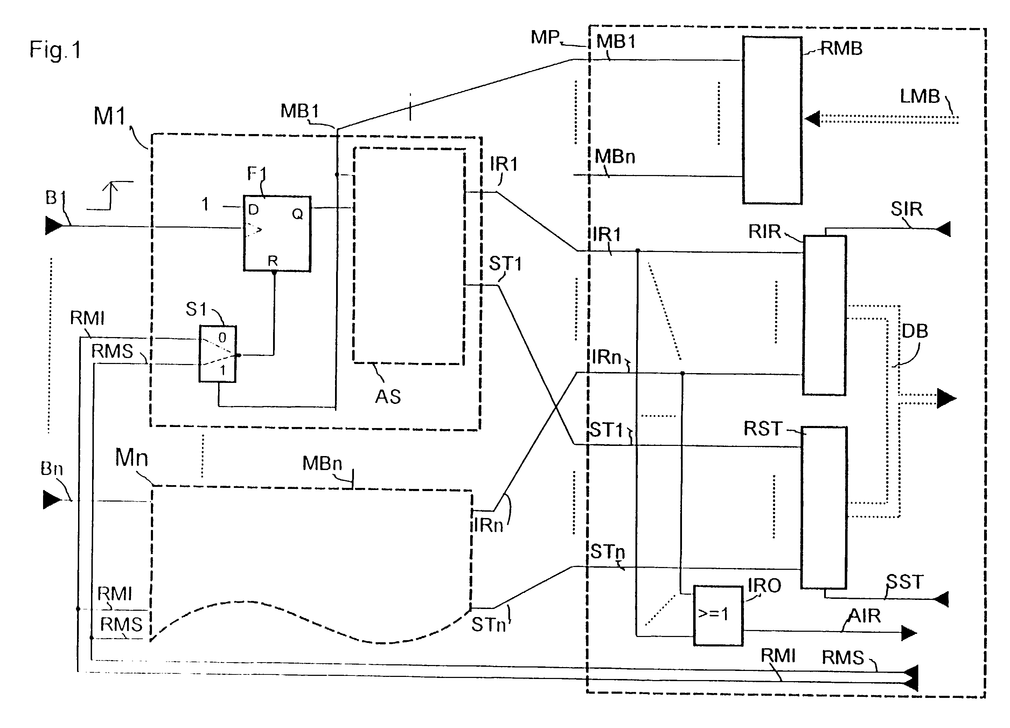

Im linken Bereich der Figur 1 werden binäre Steuer- und Meldesignale B1...Bn, nachfolgend Binärsignale genannt, der erfindungsgemäßen Schaltung von extern zugeführt. Jedes Binärsignal B1...Bn wird dabei in einem eigens zugeordneten Vorschaltmodul M1...Mn einer Vorverarbeitung unterzogen. In Figur 1 ist aus Gründen der Übersichtlichkeit nur das zum Binärsignal B1 gehörige Vorschaltmodul M1 dargestellt, während die weiteren Vorschaltmodule durch ein allgemeines Modul Mn symbolisiert sind. Nach erfolgter Vorverarbeitung erscheinen die Binärsignale B1...Bn in Form von sogenannten Interruptsignalen IR1...IRn und/oder Statussignalen ST1...STn, deren Erzeugung und Wirkungsweise nachfolgend erläutert werden, am Ausgang des jeweiligen Vorschaltmoduls M1...Mn und werden einem im rechten Bereich der Figur 1 dargestellten Ein- und Ausgabeschnittstellenbereich eines Prozessors MP zugeführt.

Gemäß der Erfindung kann jedes Vorschaltmodul M1...Mn bevorzugt über ein sogenanntes Modusbit MB1...MBn so umgeschaltet werden, daß dem dazugehörigen Binärsignal B1...Bn anwendungsabhängig die Qualität eines einen Interrupt des Prozessors MP auslösenden Signals, nachfolgend interruptfähiges Binärsignal genannt, oder die Qualität eines einen Status dem Prozessor MP mitteilenden Binärsignales, nachfolgend statusfähiges Binärsignal genannt, frei zugeordnet werden kann. Gemäß dieser Zuordnung erscheint das entsprechende Binärsignal B1...Bn dann in Gestalt eines sogenannten Interruptsignales IR1...IRn bzw. eines sogenannten Statussignales ST1...STn am Ausgang des entsprechenden Vorschaltmoduls M1...Mn. Die Modusbits M1...Mn werden vom Prozessor MP bevorzugt über ein Ladesignal LMB zunächst in ein Register RMB eingeschrieben. Zur Verteilung der Bits ist jeder Ausgang des Registers RMB mit dem entsprechenden Eingang am jeweiligen Vorschaltmodul M1...Mn für die Zuführung des zugeordneten Modusbits MB1...MBn verbunden. Für die weitere Erläuterung sei angenommen, daß ein Modusbit mit der Wertigkeit 0 das entsprechende Vorschaltmodul so umschaltet, daß es das Binärsignal Bn am Eingang in ein Interruptsignal IRn am Ausgang konvertiert. Andererseits schaltet ein Modusbit mit der Wertigkeit 1 das entsprechende Vorschaltmodul so um, daß es das Binärsignal Bn am Eingang in ein Statussignal STn am Ausgang konvertiert.

Diese Anordnung hat den Vorteil, daß ohne jegliche Einschränkungen und zu jeder Zeit einem Binärsignal B1...Bn die Klassifikation als Interruptsignal oder als Statussignal zugewiesen werden kann, d.h. die Zuordnung ist frei parametrierbar. In der Praxis wird die Entscheidung, welche der insgesamt vorhandenen Binärsignale B1...Bn eine schnelle Reaktion des Prozessors erfordern, und welche nicht, oft erst spät in einem Entwicklungsablauf getroffen und muß unter Umständen auch revidiert werden muß. Dieser Umstand findet durch die Erfindung besondere Berücksichtigung, indem ein Binärsignal über die "Modebitsteuerung" anwendungsabhängig von der Interrupt-Verarbeitung des Prozessors ausgeschlossen bzw. dieser zugeführt werden kann.

Im gegenüber liegenden Ein- und Ausgabeschnittstellenbereich des Prozessors MP ist zur gleichzeitigen Entgegennahme von aktiven Interruptsignalen IR1...IRn ein erstes Register RIR vorhanden, welches über ein Steuerbit SIR zwischen den Zuständen lesen und speichern umgeschaltet werden kann. Parallel dazu ist zur gleichzeitigen Entgegennahme von aktiven Statussignalen ST1...STn ein zweites Register RST vorhanden, welches über ein Steuerbit RST ebenfalls zwischen den Zuständen lesen und speichern umgeschaltet werden kann. Dabei entspricht die Anzahl der zur Verfügung stehenden Interruptsignale IR1...IRn und der Statussignale ST1...STn jeweils der vorhandenen Anzahl an Binärsignalen B1...Bn und bestimmt damit die Bitbreite der Register RIR und RST.

Der Inhalt der Register wird durch den Prozessor MP über den Datenbus DB in geeigneten Zeitpunkten eingelesen und entsprechend weiterverarbeitet. Treten eine oder mehrere Binärsignale B1...Bn auf, welche als interruptfähige Binärsignale klassifiziert sind, so lösen diese über ein alle Interruptsignale IR1...IRn zusammenfassendes logisches ODER Gatter IRO ein Steuersignal AIR aus. Dieses Sammelsignal signalisiert dem Prozessor MP das Vorliegen mindestens eines aktiven, interruptfähigen Binärsignales B1...Bn und des entsprechenden Folgesignales IR1...IRn. Der Prozessor MP unterbricht daraufhin den normalen Programmablauf, aktiviert über das Steuerbit SIR das Register RIR, so daß der gesamte Inhalt des Registers RIR und somit auch die jeweils aktiven Signale aus der Gruppe IR1...IRn über den Datenbus DB dem Prozessor MP zugeführt werden. Dieser kann daraufhin jedem der aktiven interruptfähigen Binärsignale separat zugeordnete Handlungen auslösen.

Treten andererseits eine oder mehrere Binärsignale B1...Bn auf, welche als statusfähige Binärsignale klassifiziert sind, so stehen diese am Eingang des Registers RST an. Dessen Inhalt wird vom einem Hauptprogramm im Prozessor bei jedem normalen Durchlauf desselben und gesteuert über ein auf das Register RST einwirkendes Steuerbit SST über den Datenbus DB dem Prozessor MP zugeführt werden. Dieser kann daraufhin wiederum jedem der aktiven statusfähigen Binärsignale individuell zugeordnete Handlungen auslösen.

Die erfindungsgemäße Vorrichtung hat somit zum einen den Vorteil, daß mehrere, zeitlich eng aufeinander folgend aktiv gewordene und noch nicht bearbeitete Interruptsignale von unterschiedlichen, als Quelle dienenden Binärsignalen B1...Bn in einem einzigen Interruptvorgang dem Prozessor durch Lesen des Registers RIR zugeführt werden können. Durch diese Zwischenpufferfunktion kann einerseits der Verlust von unerwartet schnell wieder verschwindenden interruptfähigen Binärsignalen und andererseits mehrfach unmittelbar aufeinanderfolgende interruptbedingte Unterbrechungen des Programmablaufes des Prozessors MP vermieden werden. Nahezu gleichzeitig aktiv gewordene Interruptsignale IR1...IRn werden nicht priorisiert und verursachen somit keine separaten Interrupt Vorgänge. Das mehrfache, u.U. zeitlich unmittelbar aufeinander folgende Auslösen einer interruptmäßigen Unterbrechung des Programmes des Prozessors wird vermieden und somit dessen Belastung reduziert. Vielmehr werden alle durch das Lesen des Inhalts des Registers RIR als nahezu gleichzeitig aktiv erkannten Interruptsignale softwaregesteuert nacheinander bearbeitet. Andererseits verursachen weniger zeitkritische Binärsignale keine Interrupts im Prozessor mehr, können aber über das Register RST auch dann sicher erkannt werden, wenn sie nur als kurze Impulse auftreten.

Wurde somit der Inhalt des Registers RIR oder des Registers RST vom Prozessor MP "gelesen", so gibt dieser ein Rücksetzsignal RMI oder RMS ab. Wie in Figur 1 dargestellt, wird zwar dieses Signalpaar jedem der Vorschaltmodule M1...Mn zugeführt. Aufgrund der Voreinstellung jedes Vorschaltmoduls durch das entsprechende Modusbit MB1...MBn werden aber nicht alle Vorschaltmodule M1...Mn in der gleichen Weise rückgesetzt. Vielmehr werden nach Lesen des Registers RIR und der dadurch bedingten Aktivierung des dazugehörigen Rücksetzsignales RMI nur diejenigen Vorschaltmodule Mn rückgesetzt, welche über das entsprechende Modusbit MBn so umgeschaltet wurden, daß einem aktiven Binärsignal Bn am Eingang ein Interruptsignal IRn am Ausgang zugeordnet wurde. Entsprechend werden nach Lesen des Registers RST und der dadurch bedingten Aktivierung des dazugehörigen Rücksetzsignales RMS nur diejenigen Vorschaltmodule Mn rückgesetzt, welche über das entsprechende Modusbit MBn so umgeschaltet wurden, daß einem aktiven Binärsignal Bn am Eingang ein Statussignal STn am Ausgang zugeordnet wurde.

Diese Anordnung hat den besonderen Vorteil, daß die Verarbeitung der über die Modusbits als Interruptsignale und als Statussignale klassifizierten Binärsignale entkoppelt voneinander stattfinden kann. Zum einen kann die Gruppe der Statussignale über das Register RST zeitlich getrennt von den über das Register RIR erfaßten Interruptsignalen gelesen werden. Zum anderen wird aber durch das Lesen eines der beiden Register und das hierdurch bedingte Rücksetzen dazugehöriger Vorschaltmodule der Zustand der anderen Vorschaltmodule nicht beeinflußt. Werden z.B. durch das Lesen des Registers RST als Statussignale klassifizierte aktive Binärsignale, d.h. weniger eilige Informationen, abgeholt und bearbeitet, so wird durch das darauf folgende Rücksetzen der dazugehörigen Vorschaltmodule der Zustand der anderen Vorschaltmodule für interruptfähige Binärsignale und somit der Zustand des Registers RIR nicht beeinflußt. Eventuell anstehende Interruptsignale IR1...IRn werden somit nicht gelöscht, sondern können umgehend eine schnelle Bearbeitung durch den Prozessor auf dem Wege eines Interrupts erwarten.

In Figur 1 ist ferner eine erste Ausführungsform für den inneren Aufbau der identischen Vorschaltmodule M1...Mn dargestellt. Dieser soll am Beispiel des Vorschaltmoduls M1 erläutert werden. Die aktive Flanke des entsprechenden Binärsignals B1, im Beispiel die ansteigende Flanke, wird zunächst einem rücksetzbaren Speicherelement zugeführt. Hiermit kann der aktive Zustand des auslösenden Binärsignals unabhängig davon zwischengespeichert werden, ob dieser zwischenzeitlich wieder verschwindet. Bevorzugt ist das rücksetzbare Speicherelement in Form eines Flip-Flops F1 ausgeführt, dem das Binärsignal am Takteingang zugeführt wird. Der an den Ausgang Q des Flip-Flops F1 quasi abgebildete aktive Signalzustand des Binärsignales B1 wird nun einer Auswahlschaltung AS1 zugeführt. Diese bildet abhängig vom Zustand des Modusbits MB1 hieraus entweder ein aktives Interruptsignal IR1 ( z.B. bei MB1 = 0 ) oder ein aktives Statussignal ST1 ( z.B. bei MB1 = 1 ), welches dann in der bereits beschriebenen Weise entweder im Register RIR für Interruptsignale oder im Register RST für Statussignale zwischengespeichert wird. Nach Lesen des Inhalts des Registers RIR oder RST wird ein entsprechendes Rücksetzsignal RMI oder RMS gebildet und einem Schaltelement S1 im Vorschaltmodul AS1 zugeführt. Dieses leitet wiederum abhängig vom Zustand des Modusbits MB1 entweder ein aktives Rücksetzsignal RMI oder RMS an den Rücksetzeingang R des Flip-Flops F1. Ist z.B. durch ein Modusbit MB1 mit der Wertigkeit 0 das Vorschaltmodul MB1 auf die Konvertierung eines aktiven Binärsignales B1 in ein Interruptsignal IR1 geschaltet, so wird das Flip-Flop F1 über ein aktives, durch Lesen des Registers RIR ausgelöstes Rücksetzsignal RMI rückgesetzt, während ein aktives, durch das Lesen des Registers RST ausgelöstes Rücksetzsignal RMS keine Auswirkung hat.

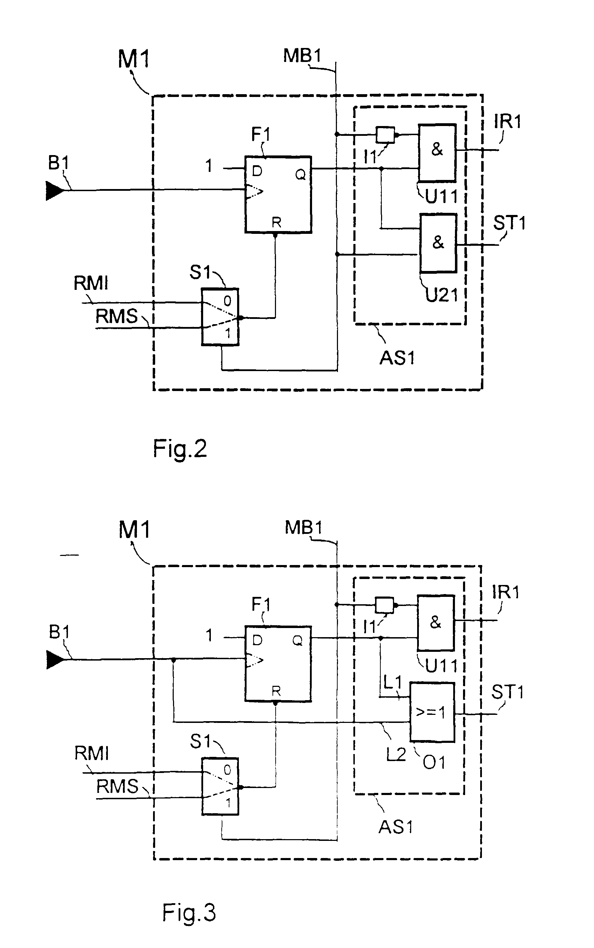

In Figur 2 ist eine erste Ausführung für ein Vorschaltmodul M1...Mn im Detail dargestellt. Die dazugehörige Auswahlschaltung AS1 weist zwei logische UND Gatter U11 und U21 zur Erzeugung eines Interruptsignales IR1 oder eines Statussignales ST1 auf. Dem einen Eingang der UND Gatter U11, U21 wird jeweils das Ausgangssignal Q des Flip-Flops F1 zugeführt. Dem anderen Eingang des Gatters U11 wird dagegen das Modusbit MB1 invertiert über einen Inverter I1, und dem anderen Eingang des Gatters U21 wird das Modusbit MB1 direkt zugeführt. Dies hat zur Folge, daß bei einem Modusbit mit der Wertigkeit 0 ein aktives Binärsignal B1 ein Interruptsignal IR1 über das Gatter U11 erzeugt, während bei einem Modusbit mit der Wertigkeit 1 ein aktives Binärsignal B1 ein Statussignal ST1 über das Gatter U21 erzeugt. Über das Flip-Flop F1, welches jede aktive Flanke eines Binärsignales B1...Bn unabhängig von dessen Klassifikation als interruptfähiges oder statusfähiges Binärsignal über das Modusbit speichert, wird gewährleistet, daß auch ausnahmsweise nur kurz anliegende statusfähige Binärsignale erfaßt und in ein Statussignal ST1...STn abgebildet werden.

In Figur 3 ist eine zweite, besonders vorteilhafte Ausführung für ein Vorschaltmodul M1...Mn im Detail dargestellt. Die dazugehörige Auswahlschaltung AS1 weist ein logisches UND Gatter U11 zur Erzeugung eines Interruptsignales IR1 und ein logisches ODER Gatter O1 zur Erzeugung eines Statussignales ST1 auf. Wiederum werden dem einen Eingang der beiden Gatter U11 und O1 jeweils das Ausgangssignal Q des Flip-Flops F1 zugeführt. Dagegen wird nur dem anderen Eingang des Gatters U11 das Modusbit MB1 invertiert über einen Inverter I1 zugeführt, während dem anderen Eingang des Gatters O1 über eine Leitung L2 das Binärsignal B1 direkt zugeführt wird.

Ist z.B. durch ein Modusbit MB1 mit der Wertigkeit 1 das Vorschaltmodul MB1 auf die Konvertierung eines aktiven Binärsignales B1 in ein Statussignal ST1 geschaltet, so ist das UND Gatter U11 über den Inverter I1 blockiert und die Erzeugung eines Interruptsignales verhindert. Eine aktive Flanke des binären Signals B1 setzt dann das Flip-Flop F1. Dessen Ausgang Q erzeugt dann über die Leitung L1 und das ODER Gatter O1 ein aktives Statussignal ST1. Wird nach Lesen des Registers RST und Erkennung der Statusänderung durch den Prozessor MP ein Rücksetzsignal RMS erzeugt, so wird zwar das Flip-Flop F1 wegen der entsprechenden Stellung des Schalters S1 rückgesetzt. Liegt das verursachende Binärsignal B1 aber unverändert an, so wird nun über die Leitung L2 und das ODER Gatter O1 ebenfalls unverändert ein Statussignal ST1 erzeugt. Diese Anordnung hat den Vorteil, daß somit in der Regel längere Zeiträume, d.h. mehrere Prozessorzyklen aktive statusfähige Binärsignale B1 beobachtet und insbesondere der Zeitpunkt von deren Inaktivierung erfaßt werden kann.

Ist andererseits durch ein Modusbit MB1 mit der Wertigkeit 0 das Vorschaltmodul MB1 auf die Konvertierung eines aktiven Binärsignales B1 in ein Interruptsignal IR1 geschaltet, so ist das UND Gatter U11 über den Inverter I1 aktiviert. Eine aktive Flanke des binären Signals B1 setzt das Flip-Flop F1. Dessen Ausgang Q erzeugt dann über UND Gatter U11 ein aktives Interruptsignales IR1. Daß über die Leitungen L1, L2 in diesem Fall auch ein aktives Signal ST1 am Ausgang des ODER Gatters erscheint, ist zunächst ohne Bedeutung. Aufgrund des Interruptssignals IR1 wird über das Gatter IRO und den dadurch verursachten Sammelalarm AIR der Ablauf des Hauptprogramms im Prozessor interruptmäßig unterbrochen und der Inhalt des dazugehörigen Registers RIR ordnungsgemäß gelesen. Hierdurch wird das oder die als Interruptquelle dienenden Binärsignale B1...Bn identifiziert und entsprechende Aktionen ausgelöst.

Nach Lesen des Registers RIR setzt der Prozessor die unterbrochene Bearbeitung des Hauptprogrammes fort. Ferner wird wiederum ein Rücksetzsignal RIS erzeugt und das Flip-Flop F1 wegen der entsprechenden Stellung des Schalters S1 rückgesetzt. Liegt nun aber entgegen den üblichen Erwartungen das verursachende Binärsignal B1 unverändert an, so wird nun das über die Leitung L2 und das ODER Gatter O1 erzeugte Signal ST1 aktiv. Dieses wird vom Prozessor als ein Statussignal dann erfaßt, wenn das Hauptprogramm im Laufe der normalen Bearbeitung turnusgemäß das Register RST für Statussignale ließt. Das Hauptprogramm kann nun Aus der Divergenz zwischen der Klassifikation des Binärsignales B1 als interruptfähiges Binärsignal einerseits, und der unveränderten Aktivität dieses Signals in Form eines quasi übergeleiteten Statussignales trotz vorangegangener Interruptbearbeitung erkennen, daß ein nicht gewöhnlicher Zustand, möglicherweise sogar ein Fehlerzustand vorliegt, welcher durch die über den Interrupt ausgelösten Handlungen nicht beseitigt werden kann. Ferner wird verhindert, daß dieses fehlerhaft unverändert aktive interruptfähige Binärsignal B1 dauernd Interrupte im Prozessor MP auslöst und somit die normale Bearbeitung von dessen Hauptprogramm nahezu zum Erliegen bringt.

Die in Figur 2 dargestellte Ausführung hat somit den Vorteil, daß die Fähigkeit der Schaltung, ausgelöst durch ein einziges Interruptsignal verschiedene mehrere zeitlich eng aufeinander folgend aktiv gewordene interruptfähige Binärsignale vom Prozessor in einer einzigen Interruptroutine quasi parallel zu verarbeiten, nicht beeinträchtigt wird. Die durch das Auslesen des Registers RIR verursachte Rückstellung der betroffenen Vorschaltmodule löscht somit alle bislang aktiven Interruptsignale IR1...IRn. Auch wenn eines der einen Interrupt anfordernden Binärsignale weiterhin aktiv bleibt sollte, wird über das ODER Gatter IRO und das Steuersignal AIR keine neue Interrupt-Anforderung mehr ausgelöst. Das "gestörte" Binärsignal wird somit trotz entsprechender Voreinstellung über das Modusbit quasi automatisch aus der Interruptbearbeitung herausgenommen und in die Ebene der Statussignalbearbeitung übergeleitet. Die Interrupt Routine im Prozessorsystem kann nun wieder auf neue, aktiv gewordene Interruptsignale IRn von nicht gestörten Binärsignalen Bn reagieren.

Die erfindungsgemäße Anschaltung zeichnet sich einerseits durch einen einfachen, aufwandsarmen Hardwareaufbau insbesondere der Vorschaltmodule AS1...ASn aus. Andererseits sind diese mittels der Modusbitsteuerung universell sowohl für interruptfähige, eine schnelle Reaktion erfordernde Binärsignale, als auch für statusfähige, weniger zeitprior zu bearbeitende Binärsignale einsetzbar. Schließlich können diese bei einer weiteren Ausführung so weitergebildet sein, daß auch fehlerbedingt dauerhaft anliegende interruptfähige Binärsignale erkannt werden und keine Blockierung der Anschaltung verursachen.

## Patentansprüche

1. Vorrichtung zur Einkopplung von als Steuer- und Meldesignalen dienenden Binärsignalen (B1...Bn) in einen Prozessor (MP), wobei jedes Binärsignal (B1...Bn) einem separat zugeordneten Vorschaltmodul (MB1...MBn) zugeführt wird, die
a) sowohl jeweils einen Ausgang (IR1...IRn) zur Abgabe eines als interruptfähig als auch jeweils einen Ausgang (ST1...STn) zur Abgabe eines als statusfähig klassifizierten Binärsignals (B1...Bn) aufweisen, und die
b) über den Prozessor (MP) anwendungsabhängig so umgeschaltet werden können, daß diese bei Auftreten eines aktiven Zustands des entsprechenden Binärsignals (B1...Bn) am entsprechenden Ausgang ein den normalen Programmablauf des Prozessor (MP) unterbrechendes Interruptsignal (IR1...IRn) oder ein während des normalen Programmablaufes vom Prozessor (MP) erfaßbares Statussignal (ST1...STn) erzeugen.

2. Vorrichtung nach einem der vorangegangenen Ansprüche, wobei bevorzugt im Prozessor (MP) zur Zwischenspeicherung sowohl ein Register (RIR) für Interruptsignale (IR1...IRn) als auch ein Register (RST) für Statussignale (ST1...STn) vorhanden ist.

3. Vorrichtung nach Anspruch 2, wobei bei Auftreten eines Interruptsignals (IRn) der normale Programmablauf des Prozessors (MP) unterbrochen, der Inhalt des Registers für Interruptsignale (IR1...IRn) gelesen und ein erstes Rücksetzsignal (RMI) durch den Prozessor (MP) für diejenigen Vorschaltmodule (MB1...MBn) erzeugt wird, welche zur Erzeugung von Interruptsignalen (IR1...IRn) umgeschaltet wurden.

4. Vorrichtung nach Anspruch 2, wobei im normalen Ablauf des Programmes des Prozessors (MP) der Inhalt des Registers für Statussignale (ST1...STn) gelesen und ein zweites Rücksetzsignal (RMS) durch den Prozessor (MP) für diejenigen Vorschaltmodule (MB1...MBn) erzeugt wird, welche zur Erzeugung von Statussignalen (ST1...STn) umgeschaltet worden sind.

5. Vorrichtung nach einem der vorangegangenen Ansprüche, wobei die Interruptsignale (IR1...IRn) der Vorschaltmodule (MB1...MBn) über ein bevorzugt logisches ODER Gatter (IRO) zu einem Interrupt anfordernden Signal (AIR) für den Prozessor (MP) zusammengefaßt werden.

6. Vorrichtung nach einem der Ansprüche 2 bis 5, wobei die Breite der Register für Interrupt- und Statussignale (RIR,RST) der Anzahl der Binärsignale (B1...Bn) entspricht.

7. Vorrichtung nach einem der vorangegangenen Ansprüche, wobei jedes Vorschaltmodul (MB1...MBn) sowohl einen Ausgang für ein Interruptsignal (IR1...IRn) als auch einen Ausgang für ein Statussignal (ST1...STn) aufweist.

8. Vorrichtung nach einem der vorangegangenen Ansprüche, wobei jedes Vorschaltmodul (MB1...MBn) ein rücksetzbares Speicherelement (F1...Fn), insbesondere ein Flip-Flop, für die aktive Flanke des dazugehörigen Binärsignals (B1...Bn) aufweist.

9. Vorrichtung nach Anspruch 8, wobei dem rücksetzbaren Speicherelement (F1...Fn) eine vom Prozessor (MP) umschaltbare Auswahlschaltung (AS1...ASn) nachgeschaltet ist.

10. Vorrichtung nach Anspruch 9, wobei die Auswahlschaltungen (AS1...ASn) in den Vorschaltmodulen (MB1...MBn) von je einem Modusbit (MB1...MBn) umgeschaltet werden, und die Modusbits (MB1...MBn) vom Prozessor (MP) in einem Register für Modusbits (RMB) hinterlegt sind und separat den Vorschaltmodulen (MB1...MBn) zugeführt werden.

11. Vorrichtung nach den Ansprüchen 9 und 10, wobei die Auswahlschaltungen (AS1...ASn) in den Vorschaltmodulen (MB1...MBn)
a) jeweils ein UND Gatter (U11...U1n) zur Erzeugung eines Interruptsignales (IR1...IRn) aufweisen, wobei der eine Eingang des Gatters mit dem Ausgang des rücksetzbaren Speicherelements (F1...Fn) verbunden ist und der andere Eingang des Gatters mit dem Modusbit (MB1...MBn) beaufschlagt wird, und
b) jeweils ein ODER Gatter (O1...On) zur Erzeugung eines Statussignales (ST1...Stn) aufweisen, wobei der eine Eingang des Gatters mit dem Ausgang des rücksetzbaren Speicherelements (F1...Fn) verbunden ist und der andere Eingang des Gatters mit dem Binärsignal (B1...Bn) beaufschlagt wird.

## Claims

1. Device for coupling binary signals (Bl...Bn) used as control and warning signals into a processor (MP), each binary signal (B1...Bn) being supplied to a separately allocated input module (MB1...MBn) which
a) have in each case both an output (IR1...Irn) for emitting a binary signal (B1...Bn) classified as interrupt-capable and in each case an output (ST1...STn) for emitting a binary signal (B1...Bn) classified as status-capable, and which
b) can be switched over in an application-specific manner via the processor (MP) in such a manner that, when an active state of the corresponding binary signal (B1...Bn) occurs, these modules generate at the corresponding output an interrupt signal (IR1...IRn) interrupting the normal program sequence of the processor (MP) or a status signal (ST1...STn) which is detected by the processor (MP) during the normal program sequence.

2. Device according to one of the preceding claims, in which both a register (RIR) for interrupt signals (IR1...IRn) and a register (RST) for status signals (ST1...STn) is preferably present for temporary storage in the processor (MP).

3. Device according to Claim 2, in which, when an interrupt signal (IRn) occurs, the normal program sequence of the processor (MP) is interrupted, the content of the register for interrupt signals (IR1...IRn) is read and a first reset signal (RMI) is generated by the processor (MP) for those input modules (MB1...MBn) which were switched over for generating interrupt signals (IR1...IRn).

4. Device according to Claim 2, in which, in the normal sequence of the program of the processor (MP), the content of the register for status signals (ST1...STn) is read and a second reset signal (RMS) is generated by the processor (MP) for those input modules (MB1...MBn) which were switched over for generating status signals (ST1...STn).

5. Device according to one of the preceding claims, in which the interrupt signals (IR1...IRn) of the input modules (MB1...MBn) are combined into an interrupt requesting signal (AIR) for the processor (MP) via a preferably logic OR gate (IRO).

6. Device according to one of Claims 2 to 5, in which the width of the registers for interrupt and status signals (RIR, RST) corresponds to the number of binary signals (B1...Bn).

7. Device according to one of the preceding claims, in which each input module (MB1...MBn) has both an output for an interrupt signal (IR1...IRn) and an output for a status signal (ST1...STn).

8. Device according to one of the preceding claims, in which each input module (MB1...MBn) has a resettable storage element (F1...Fn), especially a flip flop, for the active edge of the associated binary signal (B1...Bn).

9. Device according to Claim 8, in which the resettable storage element (F1...Fn) is followed by a selection circuit (AS1...ASn) which can be switched over by the processor (MP).

10. Device according to Claim 9, in which the selection circuits (AS1...ASn) in the input modules (MB1...MBn) are switched over by one mode bit (MB1...MBn) each, and the mode bits (MB1...MBn) are stored by the processor (MP) in a register for mode bits (RMB) and are supplied separately to the input modules (MB1...MBn).

11. Device according to Claims 9 and 10, in which the selection circuits (AS1...ASn) in the input modules (MB1...MBn) have
a) in each case an AND gate (U11...U1n) for generating an interrupt signal (IR1...IRn), one input of the gate being connected to the output of the resettable storage element (F1...Fn) and the mode bit (MB1...MBn) being applied to the other input of the gate, and
b) in each case an OR gate (O1...On) for generating a status signal (ST1...STn), one input of the gate being connected to the output of the resettable storage element (F1...Fn) and the binary signal (B1...Bn) being applied to the other input of the gate.

## Revendications

1. Dispositif destiné à injecter de signaux binaires (B1...Bn) servant de signaux de commande et de signalisation dans un processeur (MP), chaque signal binaire (B1...Bn) étant délivré à un module monté en série (MB1...MBn) lui étant associé de manière distincte, module qui
a) présente respectivement tant une sortie (IR1...IRn) destinée à l'émission d'un signal binaire répertorié parmi les signaux d'interruption que, respectivement, une sortie (ST1...STn) destinée à l'émission d'un signal binaire (B1...Bn) répertorié parmi les signaux d'état et qui
b) peut être commuté en fonction de l'utilisation que l'on en fait à l'aide du processeur (MP), de telle sorte que celui-ci génère, lors de l'apparition d'un état actif du signal binaire (B1...Bn) correspondant, un signal d'interruption (IR1...IRn) interrompant le déroulement normal du programme du processeur (MP) sur la sortie correspondante, ou un signal d'état (ST1...STn) de saisie pendant le déroulement normal du programme du processeur (MP).

2. Dispositif selon la revendication précédente, dans lequel, se trouve, dans le processeur (MP) destiné à l'enregistrement temporaire, de préférence tant un registre (RIR) destiné aux signaux d'interruption (IR1...IRn) qu'un registre (RST) destiné aux signaux d'état (ST1...STn).

3. Dispositif selon la revendication 2, dans lequel, lors de l'apparition d'un signal d'interruption (IRn), le déroulement normal du programme du processeur (MP) a été interrompu, le contenu du registre destiné aux signaux d'interruption (IR1...IRn) a été lu et un premier signal de réinitialisation (RMI) a été généré par le processeur (MP) pour ces modules montés en série (MB1...MBn), lesquels ont été commutés pour générer des signaux d'interruption (IR1...IRn).

4. Dispositif selon la revendication 2, dans lequel, lors du déroulement normal du programme du processeur (MP), le contenu du registre destiné aux signaux d'état (ST1...STn) a été lu et un deuxième signal de réinitialisation (RMS) est généré à l'aide du processeur (MP) pour ces modules montés en série (MB1...MBn), qui ont été commutés pour générer des signaux d'état (ST1...STn).

5. Dispositif selon l'une des revendications précédentes, dans lequel les signaux d'interruption (IR1...IRn) des modules montés en série (MB1...MBn) sont regroupés à l'aide d'une porte logique OU (IRO), de préférence pour générer un signal (AIR) exigeant une interruption du processeur (MP).

6. Dispositif selon l'une des revendications 2 à 5, dans lequel la largeur du registre destiné aux signaux d'interruption et d'état (RIR, RST) correspond au nombre de signaux binaires (B1...Bn).

7. Dispositif selon l'une des revendications précédentes, dans lequel chaque module monté en série (MB1...MBn) présente tant une sortie prévue pour un signal d'interruption (IR1...IRn) qu'une sortie prévue pour un signal d'état (ST1...STn).

8. Dispositif selon l'une des revendications précédentes, dans lequel chaque module monté en série (MB1...MBn) comporte un élément de mémorisation (F1...Fn) pouvant être remis à zéro, en particulier une bascule bistable, sur le front d'impulsion actif du signal binaire (B1...Bn) associé.

9. Dispositif selon la revendication 8, dans lequel un montage de sélection (AS1...Asn) susceptible d'être commuté par le processeur (MP) est placé en aval de l'élément de mémorisation (F1...Fn) pouvant être remis à zéro.

10. Dispositif selon la revendication 9, dans lequel les montages de sélection (AS1...Asn) des modules montés en série (MB1...MBn) sont chacun commutés par un bit de mode (MB1...MBn), et les bits de mode (MB1...MBn) sont enregistrés par le processeur (MP) dans un registre pour bits de mode (RMB) et délivrés de manière distincte aux modules montés en série (MB1...MBn).

11. Dispositif selon les revendications 9 et 10, dans lequel les montages de sélection (AS1...Asn) se trouvant dans les modules montés en série (MB1...MBn) comportent
a) respectivement une porte ET (U11...U1n) destinée à la génération d'un signal d'interruption (IR1...IRn), l'une des entrées de la porte étant reliée à la sortie de l'élément de mémorisation pouvant être remis à zéro (F1...Fn) et l'autre entrée de la porte recevant le bit de mode (MB1...MBn), et
b) respectivement une porte OU (O1...On) destinée à la génération d'un signal d'état (ST1...STn), l'une des entrées de la porte étant reliée à la sortie de l'élément de mémorisation pouvant être remis à zéro (F1...Fn) et l'autre entrée de la porte recevant le signal binaire (B1...Bn).
